(19) Europäisches Patentamt
European Patent Office
Office européen des brevets

(11) **EP 3 680 383 B1**

(12) **EUROPEAN PATENT SPECIFICATION**

(45) Date of publication and mention
of the grant of the patent:
**02.08.2023 Bulletin 2023/31**

(21) Application number: **19216909.2**

(22) Date of filing: **17.12.2019**

(51) International Patent Classification (IPC):
***D06F 34/34*** *(2020.01)*      *D06F 39/12* *(2006.01)*

(52) Cooperative Patent Classification (CPC):
**D06F 34/34;** D06F 39/12

(54) **CONTROL PANEL, MANUFACTURING METHOD FOR SAME, AND WASHING MACHINE HAVING SAME**

STEUERTAFEL, HERSTELLUNGSVERFAHREN DAFÜR UND WASCHMASCHINE DAMIT

PANNEAU DE COMMANDE, SON PROCÉDÉ DE FABRICATION ET LAVE-LINGE LE COMPRENANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.01.2019 CN 201910023609**

(43) Date of publication of application:
**15.07.2020 Bulletin 2020/29**

(73) Proprietor: **BSH Hausgeräte GmbH
81739 München (DE)**

(72) Inventors:
• **Liu, Shuai**
  **Nanjing, 210046 (CN)**
• **Yao, Boli**
  **Nanjing City, 210000 (CN)**
• **Yang, Fan**
  **Nanjing (CN)**

(56) References cited:
**WO-A1-2007/043838      CN-A- 109 023 849
KR-A- 20080 000 442**

1          **EP 3 680 383 B1**          2

**Description**

The present invention relates to the field of household appliance technologies, and relates to a washing machine and a control panel thereof, and a manufacturing method for the control panel.

WO 2007/043838 A1 discloses a washing machine.

CN 109 023 849 A discloses a washing machine.

KR 20080000442 A discloses a washing machine.

A washing machine usually has a control panel. Referring to FIG. A, a control panel 1 includes a first panel 2 that is fixed relative to a case body and a second panel 4 movably disposed on the first panel 2. A visual gap A inevitably exists between the first panel 2 and the second panel 4. Referring to FIG. B, a size of the visual gap A is related to an assembly gap B, a thickness D of the second panel 4, a draft taper $\alpha 1$ of the first panel 2, and a draft taper $\alpha 2$ of the second panel 4, and is even related to demolding directions of the first panel 2 and the second panel 4, where

$$A = B + Dsin\beta.$$

The demolding directions of the first panel 2 and the second panel 4 face away from their respective working surfaces 20 and 40, as shown by arrows D1 and D2. Therefore, an included angle $\beta$ is inevitably formed between a first mating surface 21 of the first panel 2 and a second mating surface 41 of the second panel 4, and the included angle $\beta$ is a sum of the draft taper $\alpha 1$ of the first panel 2 and the draft taper $\alpha 2$ of the second panel 4, that is, $\beta = \alpha 1 + \alpha 2$.

In addition, to ensure assembly stability and smooth moving of the second panel 4, the assembly gap B cannot be infinitely small.

As can be learned from the above analysis, the necessary assembly gap B is enlarged because of the included angle $\beta$ between the first mating surface 21 and the second mating surface 41, and the thickness D of the second panel 4, and a relatively large visual gap A is finally formed. The large-size visual gap affects aesthetic appearance of a product, and the first panel 2 and the second panel 4 are prone to sway during fitting. Therefore, the fitting is unstable.

In addition, referring to FIG. B, a first decorative sheet 22 and a second decorative sheet 42 cover surfaces of a first substrate 23 and a second substrate 43 respectively. Visually, a user easily sees a primary color of the first substrate 23 or the second substrate 43 on the first mating surface 21 and the second mating surface 41 through the gap, thereby affecting visual coherence of the first decorative sheet 22 and the second decorative sheet 42 and also affecting aesthetic degrees.

An objective of the present invention is to overcome disadvantages of the prior art. The present invention is defined in the independent claims. Preferred embodiments are defined in the dependent claims.

The present invention provides a control panel, including a first panel and a second panel, where the second panel is movably disposed on the first panel, the first panel has a user-oriented first working surface, the second panel has a second working surface substantially flush with the first working surface, the first panel has a first mating surface angularly connected to the first working surface and facing the second panel, the second panel has a second mating surface angularly connected to the second working surface and facing the first panel, a gap exists between the first mating surface and the second mating surface, and the first mating surface and the second mating surface are parallel to each other.

Because the first mating surface and the second mating surface are parallel to each other, and an included angle between the first mating surface and the second mating surface is zero, a visual gap between the first panel and the second panel is consistent with an assembly gap, and is not enlarged. Therefore, the visual gap can be controlled within a necessary minimum range.

The first mating surface is connected to the first working surface to form a first corner, where the first corner is an obtuse angle. The second mating surface is connected to the second working surface to form a second corner, where the second corner is an acute angle. The first corner and the second corner complement each other. Because the first corner and the second corner inevitably have draft tapers, when the first corner is an obtuse angle, the second corner is an acute angle, and the first corner and the second corner complement each other, the first mating surface and the second mating surface are parallel to each other.

The control panel of the present invention may be implemented as follows: The first panel includes a first substrate and a first decorative sheet fixedly connected to a front surface of the first substrate, where an end portion of the first decorative sheet covers the first corner and extends to cover at least a part of the first mating surface. The second panel includes a second substrate and a second decorative sheet fixedly connected to a front surface of the second substrate, where an end portion of the second decorative sheet covers the second corner and extends to cover at least a part of the second mating surface. In this way, the first decorative sheet or the second decorative sheet is still seen through the gap between the first panel and the second panel, and therefore, colors are relatively uniform, so that the gap is more concealed but not obtrusive.

In other implementations, the first panel and the second panel of the present invention may include only the first panel and the second panel, but may not include the first decorative sheet and the second decorative sheet.

The first substrate and the second substrate have a primary color. The first decorative sheet has a

2

first ground color different from the primary color, and the second decorative sheet has a second ground color different from the primary color.

In one of the implementations, the first ground color is the same as the second ground color.

The present invention further provides a manufacturing method for the control panel, including: manufacturing the first substrate and the second substrate separately by using an injection molding method, where a demolding direction of the first substrate faces away from the first working surface, a demolding direction of the second substrate is a direction faced by the second working surface, and a draft taper of the first substrate is the same as a draft taper of the second substrate.

Demolding directions of the first substrate and the second substrate are opposite. Therefore, an angle relationship between the first mating surface and the second mating surface is not a sum of the draft tapers of the first substrate and the second substrate, but a difference between the draft tapers of the first substrate and the second substrate.

Furthermore, the draft tapers of the first substrate and the second substrate are same, and therefore the first mating surface and the second mating surface can be parallel to each other.

After the first substrate and the second substrate are formed, the first decorative sheet and the second decorative sheet are fixedly mounted on the first substrate and the second substrate respectively.

The present invention further provides a washing machine, including the control panel described above.

The present invention further provides a washing machine, including the control panel manufactured by using the foregoing manufacturing method.

The following describes specific implementations of the present invention by way of example with reference to accompanying drawings.

Reference FIG. A is a schematic front view of an existing control panel;

Reference FIG. B is a partial cross-sectional view of the existing control panel in a top view direction;

FIG. 1 is a schematic diagram of a control panel according to a specific implementation; and

FIG. 2 is a partial cross-sectional view of the control panel in a top view direction according to a specific implementation.

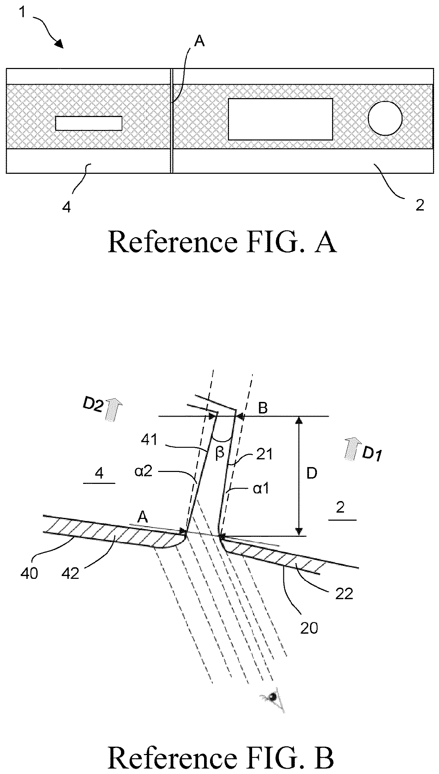

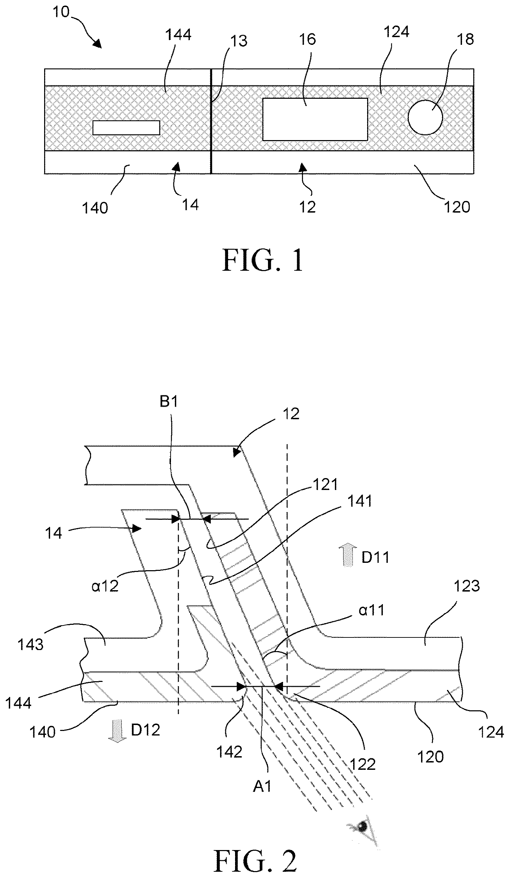

A washing machine has a control panel 10. As shown in FIG. 1, the control panel 10 includes a first panel 12 and a second panel 14. The first panel 12 includes electric control devices such as a display screen 16 and a knob 18. A detergent container (not shown) is connected to the rear of the second panel 14. The detergent container may extend into the rear of the control panel 10 or be pulled out to add a detergent. Therefore, the second panel 14 is movable relative to the first panel 12. A moving direction is perpendicular to a page.

As shown in FIG. 2, the first panel 12 has a user-oriented first working surface 120, and the second panel 14 has a second working surface 140 substantially flush with the first working surface 120. The first panel 12 has a first mating surface 121 angularly connected to the first working surface 120 and facing the second panel 14, and the second panel 14 has a second mating surface 141 angularly connected to the second working surface 140 and facing the first panel 12. A gap 13 exists between the first mating surface 121 and the second mating surface 141.

The first mating surface 121 is connected to the first working surface 120 to form a first corner 122, where the first corner 122 is an obtuse angle. The second mating surface 141 is connected to the second working surface 140 to form a second corner 142, where the second corner 142 is an acute angle. The first corner 122 and the second corner 142 complement each other. Therefore, the first mating surface 121 and the second mating surface 141 are parallel to each other. Because the first mating surface 121 and the second mating surface 141 are parallel to each other, and an included angle between the first mating surface 121 and the second mating surface 141 is zero, a visual gap A1 between the first panel 12 and the second panel 14 is consistent with an assembly gap B1, and is not enlarged. Therefore, the visual gap A1 can be controlled within a necessary minimum range.

The first panel 12 includes a first substrate 123 and a first decorative sheet 124 fixedly connected to a front surface of the first substrate 123. An end portion of the first decorative sheet 124 covers the first corner 122 and extends to cover at least a part of the first mating surface 121. The second panel 14 includes a second substrate 143 and a second decorative sheet 144 fixedly connected to a front surface of the second substrate 143. An end portion of the second decorative sheet 144 covers the second corner 142 and extends to cover at least a part of the second mating surface 141.

The first substrate 123 and the second substrate 143 have a same primary color. The first decorative sheet 124 has a first ground color different from the primary color. The second decorative sheet 144 has a second ground color different from the primary color. In this embodiment, the first ground color is the same as the second ground color.

In this way, the first decorative sheet 124 or the second decorative sheet 144 is still seen from the gap 13 between the first panel 12 and the second panel 14, and therefore colors are relatively uniform, so that the gap is more concealed but not obtrusive.

The first substrate 123 and the second substrate 143 are usually formed by injection molding. Therefore, the first corner 122 and the second corner 142 inevitably have draft tapers. A specific manufacturing method is required to make the first corner 122 and the second corner 142 complement each other.

A manufacturing method for the control panel 10 includes: manufacturing the first substrate 123 and the second substrate 143 separately by using an injection molding method. A demolding direction of the first substrate 123 faces away from the first working surface 120, as shown by an arrow D11. A demolding direction of the second substrate 143 is a direction faced by the second working surface 140, as shown by an arrow D12. In addition, a draft taper a11 of the first substrate 123 is the same as a draft taper a12 of the second substrate 143.

Demolding directions of the first substrate 123 and the second substrate 143 are opposite. Therefore, an angle relationship between the first mating surface 121 and the second mating surface 142 is not a sum of the draft tapers of the first substrate 123 and the second substrate 143, but a difference between the draft tapers of the first substrate 123 and the second substrate 143. Furthermore, the draft tapers of the first substrate 123 and the second substrate 143 are the same, and therefore the first mating surface 121 and the second mating surface 141 can be parallel to each other.

After the first substrate 123 and the second substrate 143 are formed, the first decorative sheet 124 and the second decorative sheet 144 are fixedly mounted on the first substrate 123 and the second substrate 143 respectively. In other implementations, the first panel and the second panel may not include the first decorative sheet and the second decorative sheet.

The foregoing descriptions and specific implementations shown in the accompanying drawings are merely used to describe the present invention. Any form of changes of the present invention performed by a person of ordinary skill in the related technical field within the scope of the basic technical idea of the present invention should fall within the protection scope of the present invention.

**Claims**

1. A control panel (10) for a washing machine, comprising a first panel (12) and a second panel (14), wherein the second panel (14) is movably disposed on the first panel (12), the first panel (12) has a user-oriented first working surface (120), the second panel (14) has a second working surface (140) substantially flush with the first working surface (120), the first panel (12) has a first mating surface (121) angularly connected to the first working surface (120) and facing the second panel (14), the second panel (14) has a second mating surface (141) angularly connected to the second working surface (140) and facing the first panel (12), a gap (13) exists between the first mating surface (121) and the second mating surface (141), **characterized in that** the first mating surface (121) is connected to the first working surface (120) to form a first corner (122), the first corner (122) is an obtuse angle, the second mating surface (141) is connected to the second working surface (140) to form a second corner (142), the second corner (142) is an acute angle, and the first corner (122)

and the second corner (142) complement each other, wherein the first mating surface (121) and the second mating surface (141) are parallel to each other.

2. The control panel (10) according to claim 1, **characterized in that** the first panel (12) comprises a first substrate (123) and a first decorative sheet (124) fixedly connected to a front surface of the first substrate (123), an end portion of the first decorative sheet (124) covers the first corner (122) and extends to cover at least a part of the first mating surface (121), the second panel (14) comprises a second substrate (143) and a second decorative sheet (144) fixedly connected to a front surface of the second substrate (143), and an end portion of the second decorative sheet (144) covers the second corner (142) and extends to cover at least a part of the second mating surface (141).

3. The control panel (10) according to claim 2, **characterized in that** the first substrate (123) and the second substrate (143) have a primary color, the first decorative sheet (124) has a first ground color different from the primary color, and the second decorative sheet (144) has a second ground color different from the primary color.

4. The control panel (10) according to claim 3, **characterized in that** the first ground color is the same as the second ground color.

5. A manufacturing method for a control panel (10) according to any one of claims 2 to 4, comprising: manufacturing the first substrate (123) and the second substrate (143) separately by using an injection molding method, **characterized in that** a demolding direction of the first substrate (123) faces away from the first working surface (120), a demolding direction of the second substrate (143) is a direction faced by the second working surface (140), and a draft taper of the first substrate (123) is the same as a draft taper of the second substrate (143).

6. The manufacturing method according to claim 5 for the control panel (10) according to any one of claims 2 to 4, **characterized by** comprising: fixedly mounting the first decorative sheet (124) and the second decorative sheet (144) on the first substrate (123) and the second substrate (143) respectively.

7. A washing machine, **characterized by** comprising a control panel (10) according to any one of claims 1 to 4.

8. A washing machine, **characterized by** comprising a control panel (10) manufactured by the manufacturing method according to claim 5.

**Patentansprüche**

1. Bedienblende (10) für eine Waschmaschine, die eine erste Blende (12) und eine zweite Blende (14) umfasst, wobei die zweite Blende (14) beweglich an der ersten Blende (12) angeordnet ist, die erste Blende (12) eine benutzerorientierte erste Arbeitsfläche (120) aufweist, die zweite Blende (14) eine zweite Arbeitsfläche (140) aufweist, die mit der ersten Arbeitsfläche (120) im Wesentlichen bündig abschließt, die erste Blende (12) eine erste Passfläche (121) aufweist, die in einem Winkel mit der ersten Arbeitsfläche (120) verbunden und der zweiten Blende (14) zugewandt ist, die zweite Blende (14) eine zweite Passfläche (141) aufweist, die in einem Winkel mit der zweiten Arbeitsfläche (140) verbunden und der ersten Blende (12) zugewandt ist, zwischen der ersten Passfläche (121) und der zweiten Passfläche (141) ein Spalt (13) vorhanden ist, **dadurch gekennzeichnet, dass** die erste Passfläche (121) mit der ersten Arbeitsfläche (120) verbunden ist und so eine erste Ecke (122) bildet, die erste Ecke (122) einen stumpfen Winkel aufweist, die zweite Passfläche (141) mit der zweiten Arbeitsfläche (140) verbunden ist und so eine zweite Ecke (142) bildet, die zweite Ecke (142) einen spitzen Winkel aufweist, und die erste Ecke (122) und die zweite Ecke (142) einander ergänzen, wobei die erste Passfläche (121) und die zweite Passfläche (141) parallel zueinander verlaufen.

2. Bedienblende (10) nach Anspruch 1, **dadurch gekennzeichnet, dass** die erste Blende (12) ein erstes Substrat (123) und eine erste Dekorfolie (124) umfasst, die fest mit einer vorderen Fläche des ersten Substrats (123) verbunden ist, wobei ein Endabschnitt der ersten Dekorfolie (124) die erste Ecke (122) abdeckt und so verläuft, dass er zumindest einen Teil der ersten Passfläche (121) abdeckt, die zweite Blende (14) ein zweites Substrat (143) und eine zweite Dekorfolie (144) umfasst, die fest mit einer vorderen Fläche des zweiten Substrats (143) verbunden ist, und ein Endabschnitt der zweiten Dekorfolie (144) die zweite Ecke (142) abdeckt und so verläuft, dass er zumindest einen Teil der zweiten Passfläche (141) abdeckt.

3. Bedienblende (10) nach Anspruch 2, **dadurch gekennzeichnet, dass** das erste Substrat (123) und das zweite Substrat (143) eine Primärfarbe aufweisen, die erste Dekorfolie (124) eine erste Grundfarbe aufweist, die sich von der Primärfarbe unterscheidet, und die zweite Dekorfolie (144) eine zweite Grundfarbe aufweist, die sich von der Primärfarbe unterscheidet.

4. Bedienblende (10) nach Anspruch 3, **dadurch gekennzeichnet, dass** die erste Grundfarbe der zweiten Grundfarbe entspricht.

5. Fertigungsverfahren für eine Bedienblende (10) nach einem der Ansprüche 2 bis 4, das Folgendes umfasst: separates Fertigen des ersten Substrats (123) und des zweiten Substrats (143) mithilfe eines Spritzgießverfahrens, **dadurch gekennzeichnet, dass** eine Entformrichtung für das erste Substrat (123) von der ersten Arbeitsfläche (120) weg weist, es sich bei einer Entformrichtung für das zweite Substrat (143) um eine Richtung handelt, in die die zweite Arbeitsfläche (140) weist, und eine Ausformschräge des ersten Substrats (123) der des zweiten Substrats (143) entspricht.

6. Fertigungsverfahren nach Anspruch 5 für die Bedienblende (10) nach einem der Ansprüche 2 bis 4, **dadurch gekennzeichnet, dass** es Folgendes umfasst: festes Anbringen der ersten Dekorfolie (124) und der zweiten Dekorfolie (144) an dem ersten Substrat (123) beziehungsweise dem zweiten Substrat (143).

7. Waschmaschine, **dadurch gekennzeichnet, dass** sie eine Bedienblende (10) nach einem der Ansprüche 1 bis 4 umfasst.

8. Waschmaschine, **dadurch gekennzeichnet, dass** sie eine Bedienblende (10) umfasst, die mithilfe des Fertigungsverfahrens nach Anspruch 5 gefertigt wird.

**Revendications**

1. Panneau de commande (10) pour un lave-linge, comprenant un premier panneau (12) et un deuxième panneau (14), dans lequel le deuxième panneau (14) est disposé de façon mobile sur le premier panneau (12), le premier panneau (12) a une première surface fonctionnelle conçue pour un utilisateur (120), le deuxième panneau (14) a une deuxième surface fonctionnelle (140) sensiblement à fleur de la première surface fonctionnelle (120), le premier panneau (12) a une première surface d'assemblage (121) reliée angulairement à la première surface fonctionnelle (120) et faisant face au deuxième panneau (14), le deuxième panneau (14) possède une deuxième surface d'assemblage (141) reliée angulairement à la deuxième surface fonctionnelle (140) et faisant face au premier panneau (12), et un intervalle (13) existe entre la première surface d'assemblage (121) et la deuxième surface d'assemblage (141), **caractérisé en ce que** la première surface d'assemblage (121) est reliée à la première surface fonctionnelle (120) de façon à former un premier coin (122), le premier coin (122) est un angle obtus, la deuxième surface d'assemblage (141) est reliée à la deuxième surface de travail (140) de façon à former un deuxième coin (142), le deuxième coin (142) est un angle aigu, et le premier coin (122) et le deuxième coin (142) se complètent, dans lequel la première surface d'assemblage (121) et la deuxième surface d'assemblage (141) sont parallèles l'une à l'autre.

2. Panneau de commande (10) selon la revendication 1, **caractérisé en ce que** le premier panneau (12) comprend un premier substrat (123) et une première feuille décorative (124) reliée de façon fixe à une surface frontale du premier substrat (123), une partie d'extrémité de la première feuille décorative (124) recouvre le premier coin (122) et s'étend de façon à recouvrir au moins une partie de la première surface d'assemblage (121), le deuxième panneau (14) comprend un deuxième substrat (143) et une deuxième feuille décorative (144) reliée de façon fixe à une surface frontale du deuxième substrat (143), et une partie d'extrémité de la deuxième feuille décorative (144) recouvre le deuxième coin (142) et s'étend de façon à recouvrir au moins une partie de la deuxième surface d'assemblage (141).

3. Panneau de commande (10) selon la revendication 2, **caractérisé en ce que** le premier substrat (123) et le deuxième substrat (143) ont une couleur primaire, la première feuille décorative (124) a une première couleur de fond différente de la couleur primaire, et la deuxième feuille décorative (144) a une deuxième couleur de fond différente de la couleur primaire.

4. Panneau de commande (10) selon la revendication 3, **caractérisé en ce que** la première couleur de fond est identique à la deuxième couleur de fond.

5. Procédé de fabrication d'un panneau de commande (10) selon l'une quelconque des revendications 2 à 4, comprenant :

   la fabrication du premier substrat (123) et du deuxième substrat (143) séparément au moyen d'un procédé de moulage par injection, **caractérisé en ce qu'**une direction de démoulage du premier substrat (123) est orientée en s'éloignant de la première surface fonctionnelle (120), une direction de démoulage du deuxième substrat (143) est une direction qui fait face à la deuxième surface fonctionnelle (140), et un angle de dépouille du premier substrat (123) est le même qu'un angle de dépouille du deuxième substrat (143).

6. Procédé de fabrication selon la revendication 5 du panneau de commande (10) selon l'une quelconque des revendications 2 à 4, **caractérisé en ce qu'**il comprend :

   le montage de façon fixe de la première feuille décorative (124) et de la deuxième feuille décorative (144) respectivement sur le premier substrat (123) et le deuxième substrat (143).

7. Lave-linge, **caractérisé en ce qu'**il comprend un panneau de commande (10) selon l'une quelconque des revendications 1 à 4.

8. Lave-linge, **caractérisé en ce qu'**il comprend un panneau de commande (10) fabriqué par le procédé de fabrication selon la revendication 5.

1

A

Reference FIG. A

4    2

D2

B

41

β    21

4    α2

D

A    α1

2

40    42

22

20

Reference FIG. B

FIG. 1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007043838 A1
- CN 109023849 A
- KR 20080000442 A